# FASCICULE DE BREVET EUROPEEN

(11) **EP 2 158 804 B1**
(45) Date de publication et mention de la délivrance du brevet: **20.06.2012**
(21) Numéro de dépôt: 09358008.2
(22) Date de dépôt: 25.08.2009
(51) Int. Cl.: A01G 3/025, A01G 3/037, A01D 46/253

(54) **Outil électroportatif mécanisé à deux manches.**
Mechanisiertes tragbares Elektrowerkzeug mit zwei Griffen
Mechanised portable electric tool with two handles

(30) Priorité: 26.08.2008 FR 0804711
(43) Date de publication de la demande: 03.03.2010
(73) Titulaire: PELLENC, 84120 Pertuis (FR)
(72) Inventeur: Pellenc, Roger, 84120 Pertuis (FR)
(74) Mandataire: Marek, Pierre

(56) Documents cités:
- DE-U1-202007 014 836
- JP-A- 2006 230 263
- US-A- 4 207 675
- US-A1- 2008 127 620

## Description

La présente invention concerne un outil électroportatif mécanisé à deux manches, par exemple pour l'élagage ou la taille des arbres ou arbustes.

Dans les domaines des activités agricoles, horticoles, d'entretien d'espaces verts et de jardins, il est courant d'utiliser des sécateurs manuels ou mécanisés pour la taille, lorsque les branches à couper sont accessibles et peuvent être sectionnées à bout de bras par l'utilisateur. Dans certain cas, les branches à couper ne sont pas accessibles à bout de bras et il est nécessaire d'utiliser des outils rallongés.

Dans le cas des outils manuels, on utilise des cisailles dites "universelles" pour couper des petites branches basses d'arbustes ou d'arbrisseaux. Ces cisailles universelles sont constituées de deux robustes branches se croisant à proximité de l'une de leurs extrémités et assemblées, à leur point de croisement, au moyen d'une articulation, laquelle délimite, d'une part, deux lames de coupe formant la tête active de la cisaille, et, d'autre part, deux manches d'égale longueur munis de poignées (voir US-D 464.543).

Une insuffisance propre à ce type d'outil de coupe, réside dans le fait que même s'ils permettent d'atteindre des branches plus éloignées, la puissance développée manuellement est insuffisante et l'ouverture des deux manches est très encombrante.

D'autre part, pour couper des branches qu'il n'est pas possible d'atteindre avec des outils tenus à la main ou à bout de bras, ont été proposés de nombreux outils de coupe électroportatifs mécanisés, installés à l'extrémité supérieure d'un long manche ou perche télescopique ou non. Dans le document US-2008/0.052.916, est décrit un outil de coupe de ce genre actionné manuellement au moyen d'un cordon ; le document WO-2008/023.705 décrit un sécateur électrique installé au bout d'un long manche, tandis que le document US-4.207.675 décrit une scie à chaîne montée à l'extrémité supérieure d'un long manche.

De tels outils permettent d'atteindre et de couper des branches relativement hautes, en fonction de la longueur de la perche.

Toutefois, si ces outils peuvent être tenus à deux mains lors de leur utilisation, les deux mains de l'utilisateur se trouvent nécessairement placées dans le prolongement l'une de l'autre sur le manche ou perche, ce qui limite la hauteur qu'il est possible d'atteindre et la possibilité d'obtenir instantanément le bon positionnement de la tête active de l'outil.

L'invention se propose de mettre à la disposition des utilisateurs, un outil électroportatif à deux manches permettant de remédier aux insuffisances susmentionnées des outils électroportatifs à perche connus.

Selon l'invention, cet objectif est réalisé au moyen d'un outil électroportatif comportant une tête active à entraînement motorisé animée par un actionneur et installée à l'extrémité supérieure d'un manche support de tête dont la partie basse est munie d'une poignée, cet outil étant principalement remarquable en ce qu'un deuxième manche ou manche auxiliaire est fixé ou agencé pour pouvoir être fixé sur le manche support de tête, au-dessous et à distance de ladite tête active, en formant, au moins dans sa partie proximale, un angle aigu avec ledit manche support de tête, ce manche auxiliaire étant dimensionné de sorte que son extrémité libre munie d'une poignée se trouve au niveau ou sensiblement au niveau de la poignée dont est munie la partie basse du manche support de tête, l'une desdites poignées étant agencée pour constituer la poignée de commande de l'actionneur.

Cet outil électroportatif procure plusieurs avantages, tels que, par exemple :
- possibilité d'atteindre des hauteurs plus importantes, en raison du fait que lors de son utilisation, les deux mains de l'opérateur se trouvent placées au même niveau, par opposition aux outils électroportatifs actuels selon lesquels les mains de l'utilisateur doivent être placées l'une au-dessus de l'autre sur la perche ;
- possibilité de guider et de positionner plus rapidement la tête active avec précision dans le branchage, en tenant l'outil avec les deux mains ;
- meilleur confort d'utilisation résultant de la tenue de l'outil avec les bras légèrement écartés ;
- possibilité d'utilisation de l'outil par un opérateur droitier ou gaucher, avec la faculté de monter la tête active et/ou la poignée de commande de manière orientable avec possibilité de rotation de 180° ;
- possibilité de travailler aussi bien en hauteur que près du sol, pour éviter à l'utilisateur de se baisser ;
- possibilité de mise en oeuvre dans les outils comportant une perche de longueur réglable.

Les buts, caractéristiques et avantages ci-dessus, et d'autres encore, ressortiront mieux de la description qui suit et des dessins annexés, dans lesquels :
La figure 1 est une vue en perspective d'un premier exemple de réalisation d'un outil électroportatif à deux manches selon l'invention, avec poignées formant un angle α et l'actionneur de la partie active placé en partie basse.
La figure 2 est une vue en perspective éclatée de la figure 1.
La figure 3 est une vue en perspective semblable à la figure 1, représentant l'outil en version gaucher.
La figure 4 est une vue en perspective d'un deuxième exemple de réalisation de l'outil électroportatif à deux manches selon l'invention, avec poignées parallèles et l'actionneur de la partie active situé en partie basse.
La figure 5 est une vue en perspective éclatée de la figure 4.
La figure 6 est une vue en perspective semblable à la figure 4, représentant l'outil en version gaucher
La figure 7 est une vue en perspective d'un troisième exemple de réalisation d'un outil électroportatif à deux manches selon l'invention, avec poignées formant un angle a et l'actionneur de la partie active disposé en partie haute.
La figure 8 est une vue en perspective éclatée de la figure 7.
La figure 9 est une vue en perspective analogue à la figure 8, représentant l'outil en version gaucher.
La figure 10 est une vue en perspective d'un quatrième exemple de réalisation d'un outil électroportatif à deux manches selon l'invention, avec poignées parallèles et l'actionneur de la partie active placé en partie haute.
La figure 11 est une vue en perspective éclatée de la figure 10.
La figure 12 est une vue en perspective analogue à la figure 10, représentant l'outil en version gaucher.

Les figures 13A et 13B sont des vues en perspective d'un cinquième exemple de réalisation de l'outil électroportatif à deux manches selon l'invention, dont l'un des manches est télescopique ; selon la figure 13A, l'outil est représenté à l'état raccourci, tandis que suivant la figure 13B, ledit outil est montré à l'état allongé.

On se réfère auxdits dessins pour décrire des exemples de réalisation avantageux, mais nullement limitatifs, de l'outil électroportatif à deux manches selon l'invention.

Dans le présent exposé et dans les revendications, sont utilisés des mots tels que "supérieure", "inférieure", "haute", "basse", "au-dessous", par référence à la position de travail la plus courante de l'outil permettant d'atteindre les branches hautes des arbres, ces termes n'ont donc aucun caractère restrictif.

L'invention concerne les outils électroportatifs du genre comportant une tête active 1 à entraînement motorisé installée à l'extrémité supérieure d'un manche ou d'une perche 2 dont l'extrémité inférieure est munie d'une poignée 3 permettant la tenue dudit manche support de tête 2. De préférence, la poignée 3 est une poignée permettant la commande de l'actionneur 6 assurant l'entraînement de l'organe ou des organe(s) mobiles de ladite tête active 1, comme exposé ci-après.

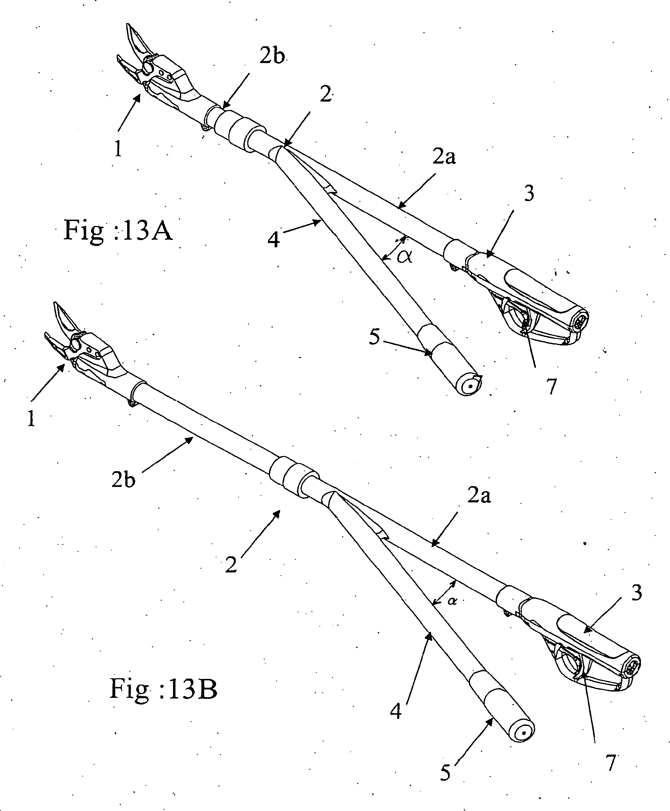

Le manche support de tête 2 peut présenter une longueur adaptée aux travaux auxquels est destiné l'outil. Il peut être formé d'un seul tube ou être constitué par une perche comprenant deux ou plus de deux tronçons de tube assemblés de manière télescopique (figures 13A et 13B), de sorte à permettre des réglages de sa longueur.

La tête active 1 peut être constituée par divers outils électroportatifs. Sur les dessins annexés, la tête active représentée est un sécateur électrique. Cependant, elle pourrait être constituée par un outil d'un autre genre, par exemple par une scie à chaîne électrique, une tête de récolte de petits fruits par secouage mécanique (voir par exemple EP-1.116.432), etc.

Selon l'invention, un deuxième manche ou manche auxiliaire 4 est fixé ou agencé pour pouvoir être fixé, par l'intermédiaire de l'une de ses extrémités, sur le manche support de tête 2, au-dessous et à distance de la tête active 1, en formant un angle aigu α avec ledit manche support de tête, au moins dans sa portion proximale. Ce manche auxiliaire 4 est plus court que le manche support de tête 2, et il est dimensionné de sorte que son extrémité inférieure libre munie d'une poignée 5 se trouve placée au niveau ou sensiblement au niveau de la poignée [de commande] 3 dont est munie la partie basse dudit manche support de tête 2.

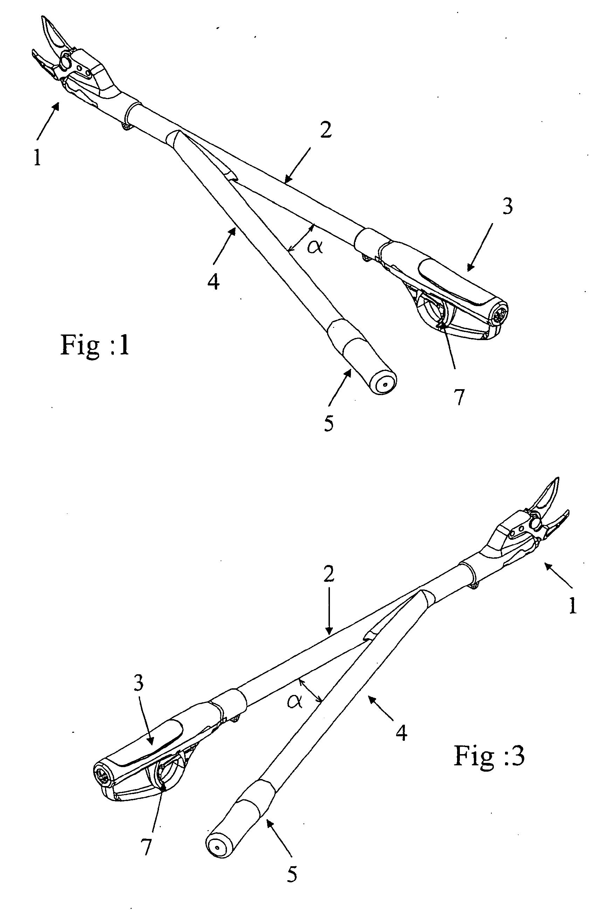

Selon le mode d'exécution illustré aux figures 1-3 et 7-9, le manche support de tête 2 et le manche auxiliaire 4 divergent progressivement à partir de leur emplacement de jonction, l'écartement au niveau des poignées 3 et 5 étant tel qu'il permet de saisir et de manier facilement l'outil à deux mains.

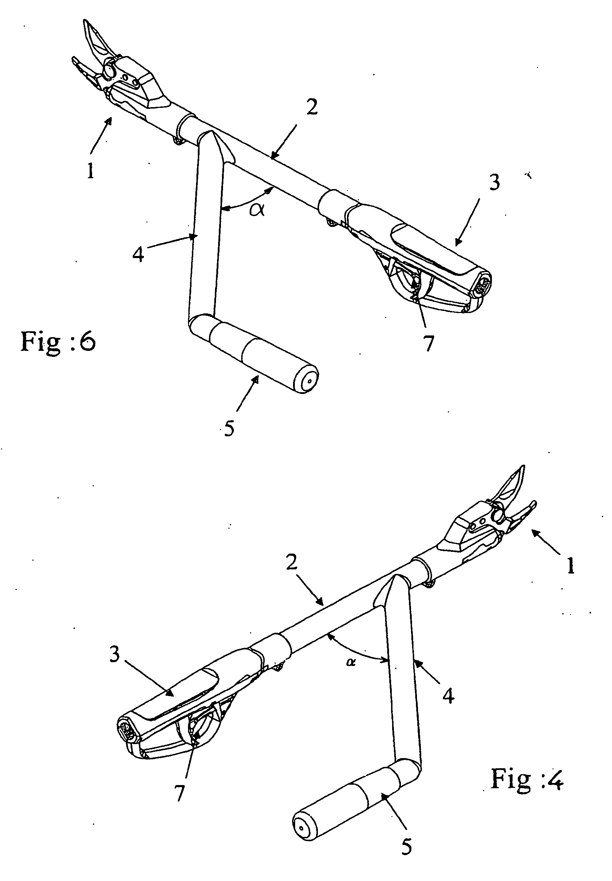

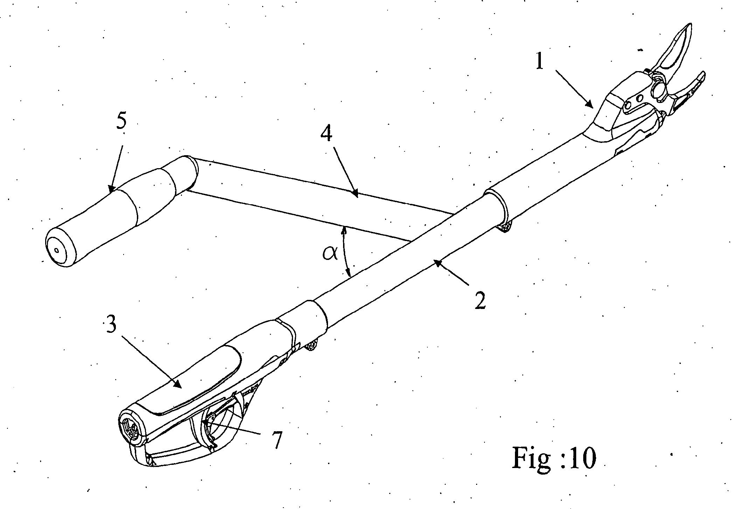

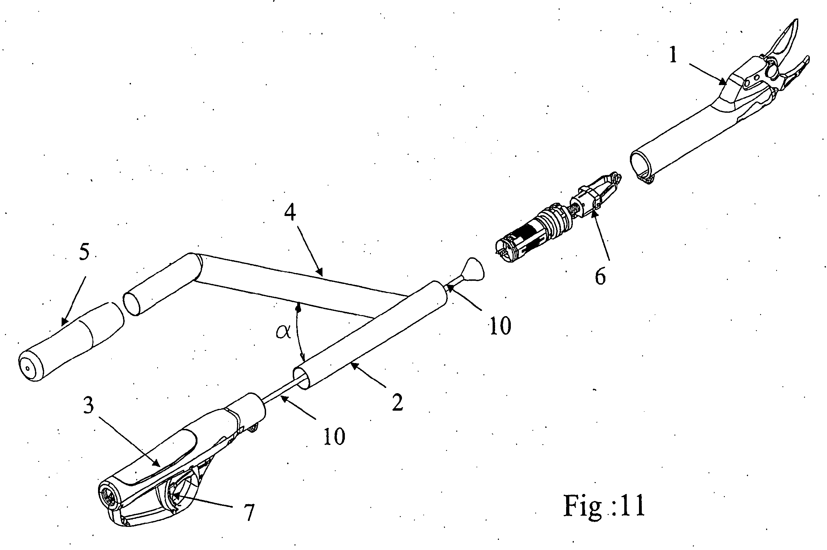

Selon un deuxième mode de réalisation illustré aux figures 4-6 et 10-12, la partie inférieure ou partie distale 4a du deuxième manche ou manche auxiliaire 4 munie de la poignée 5 est courbée ou pliée en direction de la partie basse du manche support de tête 2 pourvue de la poignée [de commande] 3, de sorte que lesdites poignées 3 et 5 se trouvent orientées parallèlement ou sensiblement parallèlement, ce qui procure un meilleur confort lors de l'utilisation de l'outil.

Selon un autre mode d'exécution représenté aux figures 13A et 13B, le manche support de tête 2 est constitué par une perche de longueur réglable formée de deux tronçons 2a, 2b reliés de manière télescopique et munis d'un moyen de blocage connu en soi, permettant d'assembler rigidement ces deux tronçons, après réglage à la longueur désirée.

Dans ce cas, le manche auxiliaire 4 est fixé sur le tronçon inférieur 2a de la perche 2.

Le manche auxiliaire 4 peut être fixé à demeure sur le manche support de tête 2. Son extrémité supérieure peut aussi être agencée de manière connue en soi, pour autoriser sa fixation amovible sur ledit manche support de tête.

Dans tous les cas, le manche auxiliaire 4 forme, au moins dans sa portion proximale, un angle aigu α avec le manche support de tête 2, de sorte à permettre à l'utilisateur de tenir l'outil à deux mains placées sensiblement au même niveau, avec un écartement de celles-ci et des bras, donnant ainsi une position de confort.

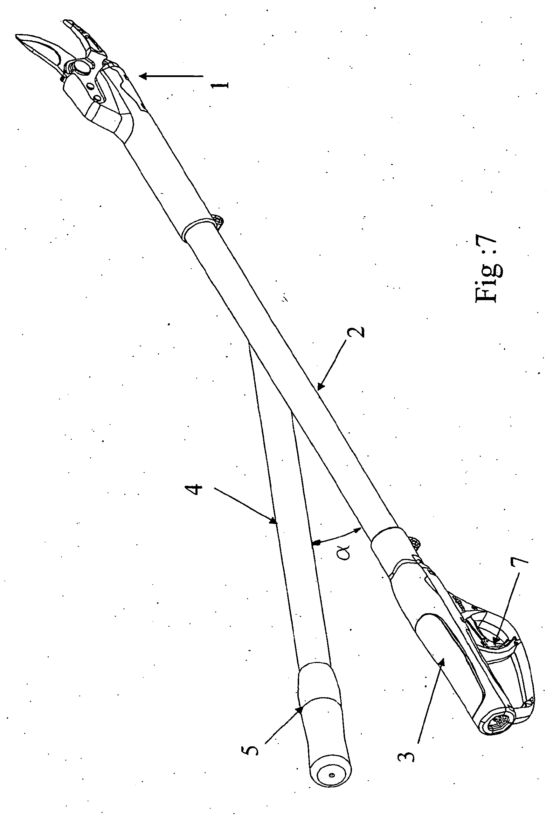

L'actionneur 6, par exemple constitué par un moto-réducteur électrique, peut être placé, de manière connue en soi :
- en partie haute du manche support de tête 2, à proximité de la tête active 1, comme montré aux figures 7 à 12,
- ou en partie basse dudit manche support de tête, à proximité de la poignée 3 comme illustré aux figures 1 à 6.

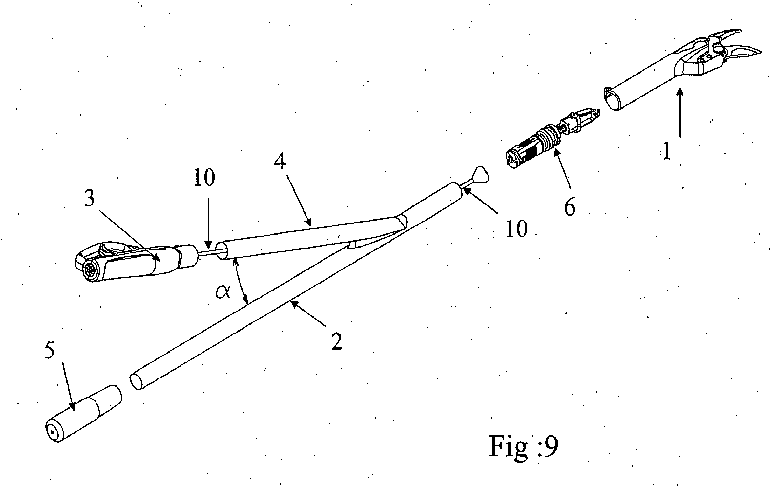

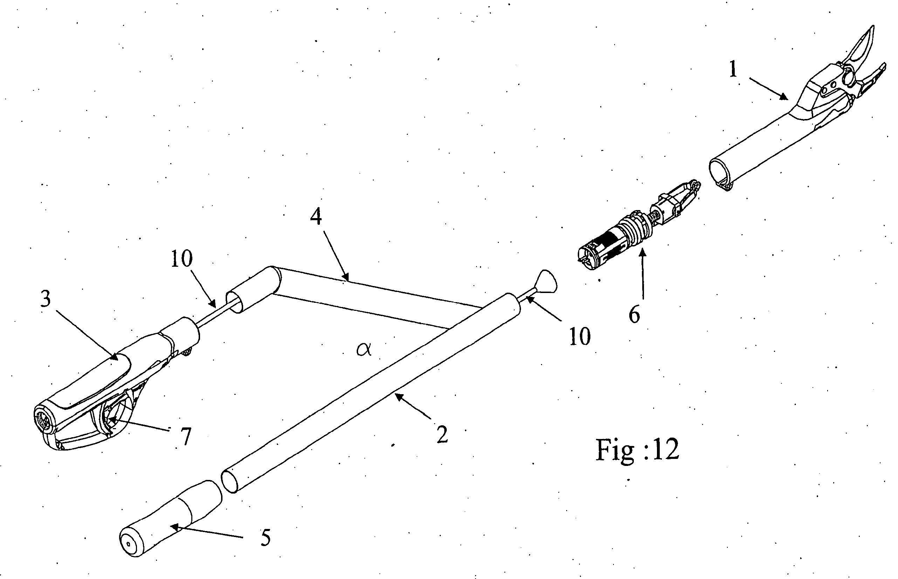

Le moyen de commande de l'actionneur 6 est installé en partie basse de l'outil. Ce moyen de commande peut être constitué :
- soit par la poignée 3 équipant l'extrémité inférieure du manche support de tête 2, comme le montrent les figures 1 à 8,
- soit par la poignée 5 disposée dans la partie inférieure du manche auxiliaire 4, comme représenté aux figures 12 et 9.

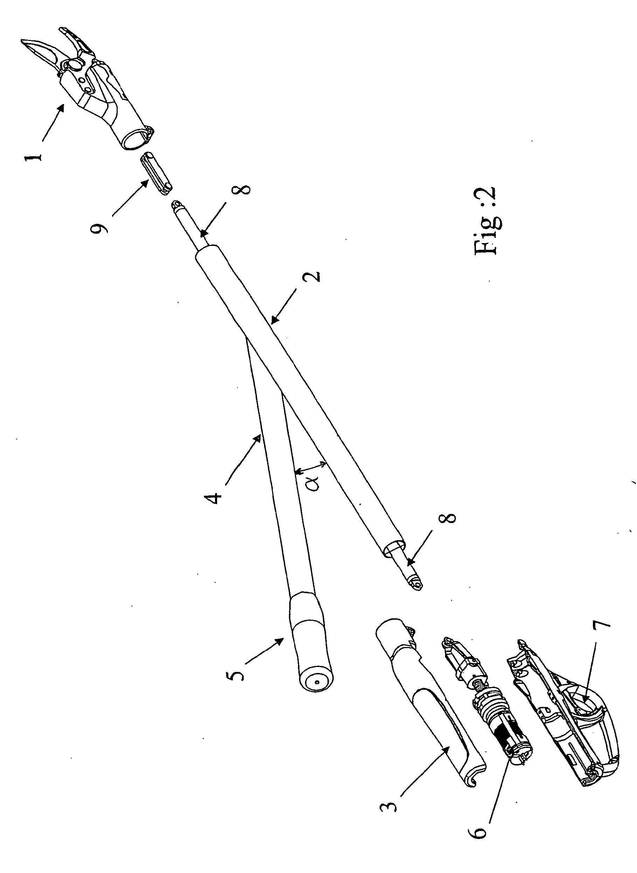

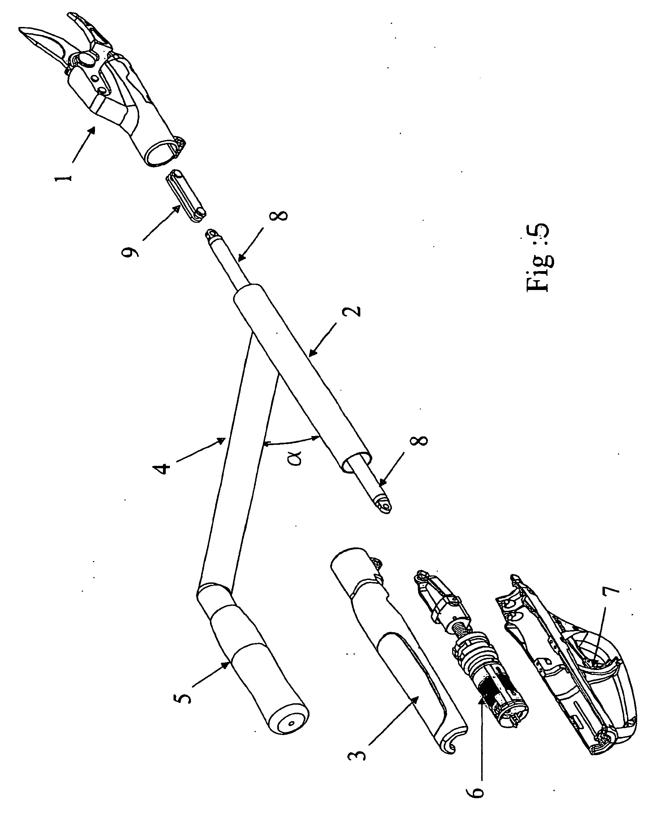

Sur les figures 2 et 5, on voit l'actionneur 6 placé à l'extrémité inférieure du manche support de tête 2 au niveau de la poignée de commande 3 dont la gâchette 7 permet de commander ledit actionneur 6 lequel, par l'intermédiaire de la tringle 8 et de la biellette 9 de transmission, permet d'animer l'organe mobile de la tête active 1.

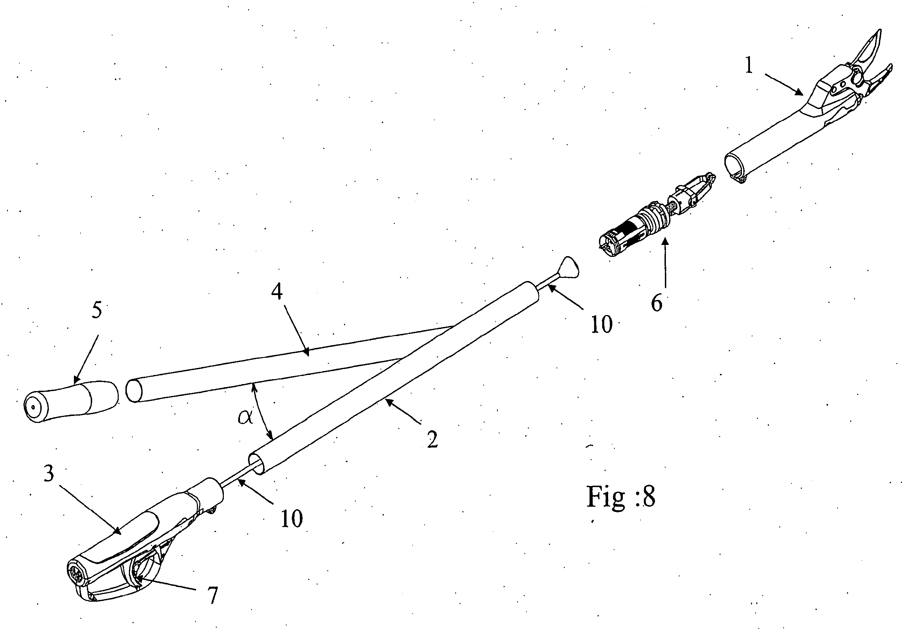

Sur les figures 8 et 9, on voit un câble électrique 10 logé dans le tube 2 et assurant la liaison électrique entre la poignée de commande 3 et le moto-réducteur 6 installé en partie haute du manche support de tête 2.

Selon le mode d'exécution représenté à la figure 12, le câble électrique reliant la poignée de commande 5 au moto-réducteur 6 est logé dans le manche auxiliaire 4 et traverse la partie supérieure du manche support de tête 2.

La poignée de commande 3 ou la poignée de commande 5 peut être montée de manière pivotante, au moyen de tout système ou dispositif connu en soi, avec possibilité de rotation sur environ 180°, de sorte à pouvoir être orientée en fonction des utilisateurs (droitiers ou gauchers) et des habitudes ou de la pratique de ceux-ci, comme illustré aux figures 3 et 6.

La tête active 1 peut également être montée avec une possibilité de pivotement, en partie haute du manche support de tête, au moyen de tout système ou dispositif connu en soi, avec possibilité de rotation de 180°, de sorte à pouvoir être orientée en fonction de la latéralité des utilisateurs (droitiers ou gauchers) et des habitudes ou de la pratique de ceux-ci, comme illustré aux figures 3 et 6.

Dans le mode d'exécution selon lequel l'actionneur 6 est positionné en partie haute du manche support de tête 2, il est possible, comme indiqué précédemment, pour passer de la version droitier à la version gaucher, de faire tourner la poignée 3 et la tête active 1, mais il est aussi possible d'inverser les poignées 3 et 5 car la liaison entre la poignée de commande et ledit actionneur, est réalisée avec le câble 10 qui peut passer indifféremment dans le tube 2 ou dans le tube 4 comme représenté aux figures 8 et 9, la poignée 5 constituant alors la poignée de commande de l'outil (figure 9).

## Revendications

1. Outil électroportatif comportant une tête active (1) à entraînement motorisé animée par un actionneur (6) et installée à l'extrémité supérieure d'un manche (2) support de tête dont la partie basse est munie d'une poignée (3), **caractérisé en ce qu'**un deuxième manche ou manche auxiliaire (4) est fixé ou agencé pour pouvoir être fixé sur le manche support de tête (2), au-dessous et à distance de ladite tête active (1), en formant, au moins dans sa portion proximale, un angle aigu (α) avec ledit manche support de tête (2), ce manche auxiliaire (4) étant dimensionné de sorte que son extrémité libre munie d'une poignée (5) se trouve au niveau ou sensiblement au niveau de la poignée (3) dont est munie la partie basse du manche support de tête (2), l'une desdites poignées (3, 5) constituant la poignée de commande dudit actionneur.

2. Outil électroportatif à deux manches selon la revendication 1, **caractérisé en ce que** la partie inférieure (4a) du deuxième manche ou manche auxiliaire (4) munie d'une poignée (5) est courbée ou pliée en direction de la partie basse du manche support de tête (2) pourvue d'une poignée (3), de sorte que lesdites poignées (3 et 5) se trouvent orientées parallèlement ou sensiblement parallèlement.

3. Outil électroportatif à deux manches selon l'une des revendications 1 ou 2, **caractérisé en ce que** le manche support de tête (2) est constitué par une perche de longueur réglable formée de deux ou plusieurs tronçons (2a, 2b) reliés de manière télescopique et munis de moyens de blocage connus en soi, permettant d'assembler rigidement ces deux ou plusieurs tronçons, après réglage à la longueur désirée ; le manche auxiliaire (4) étant fixé sur le tronçon inférieur (2a) de la perche.

4. Outil électroportatif à deux manches selon l'une quelconque des revendications 1 à 3, **caractérisé en ce que** l'actionneur assurant l'entraînement de l'organe mobile ou des organes mobiles de la tête active (1) est installé en partie haute du manche support de tête (2).

5. Outil électroportatif à deux manches selon l'une quelconque des revendications 1 à 3, **caractérisé en ce que** l'actionneur assurant l'entraînement de l'organe mobile ou des organes mobiles de la tête active (1) est installé en partie basse du manche support de tête (2).

6. Outil électroportatif à deux manches selon l'une quelconque des revendications 1 à 5, **caractérisé en ce que** la poignée (3) dont est muni, en partie basse, le manche support de tête (2), est constituée par la poignée de commande de l'actionneur (6).

7. Outil électroportatif à deux manches selon l'une quelconque des revendications 1 à 5, **caractérisé en ce que** la poignée (5) dont est muni, en partie basse, le manche auxiliaire (4), est constituée par la poignée de commande de l'actionneur (6).

8. Outil électroportatif à deux manches selon l'une quelconque des revendications 1 à 3, **caractérisé en ce que** la poignée de commande (3 ou 5) est montée avec une aptitude de rotation sur environ 180°, de sorte à permettre un réglage de son orientation et, de la sorte, son utilisation par un opérateur gaucher ou droitier.

9. Outil électroportatif à deux manches selon l'une quelconque des revendications 1 à 3 ou 8, **caractérisé en ce que** la tête active (1) est montée avec une aptitude de rotation sur environ 180°, de sorte à permettre un réglage de son orientation et, de la sorte, son utilisation par un opérateur gaucher ou droitier.

10. Outil électroportatif à deux manches selon l'une des revendications 1 à 8, **caractérisé en ce que** sa tête active (1) est constituée par un sécateur, ou par une scie à chaîne.

11. Outil électroportatif à deux manches selon l'une des revendications 1 à 8, **caractérisé en ce que** sa tête active (1) est constituée par une tête de récolte de petits fruits.

## Claims

1. A portable electric tool comprising a motor-driven active head (1) actuated by an actuator (6) and installed at the upper end of a head-support shaft (2) of which the lower part is provided with a handle (3), **characterised in that** a second shaft or auxiliary shaft (4) is fixed or arranged so it can be fixed to the head-support shaft (2) below and at a spacing from said active head (1), forming at least in its proximal portion an acute angle (α) with said head-support shaft (2), the auxiliary shaft (4) being of such dimension that its free end provided with a handle (5) is at the level of or substantially at the level of the handle (3) with which the lower part of the head-support shaft (2) is provided, one of said handles (3, 5) constituting the control handle for said actuator.

2. A double-shaft portable electric tool according to claim 1 **characterised in that** the lower part (4a) of the second or auxiliary shaft (4) provided with a handle (5) is curved or bent in the direction of the lower part of the head-support shaft (2) provided with a handle (3) so that said handles (3 and 5) are oriented parallel or substantially parallel.

3. A double-shaft portable electric tool according to one of claims 1 and 2 **characterised in that** the head-support shaft (2) is formed by a rod of adjustable length formed by two or more portions (2a, 2b) telescopically connected and provided with per se known locking means permitting said two or more portions to be rigidly assembled after adjustment to the desired length; the auxiliary shaft (4) being fixed on the lower portion (2a) of the rod.

4. A double-shaft portable electric tool according to any one of claims 1 to 3 **characterised in that** the actuator for driving the movable member or members of the active head (1) is installed in the upper part of the head-support shaft (2).

5. A double-shaft portable electric tool according to any one of claims 1 to 3 **characterised in that** the actuator for driving the movable member or members of the active head (1) is installed in the lower part of the head-support shaft (2).

6. A double-shaft portable electric tool according to any one of claims 1 to 6 **characterised in that** the handle (3) with which the head-support shaft (2) is provided in the lower part is formed by the control handle for the actuator (6).

7. A double-shaft portable electric tool according to any one of claims 1 to 6 **characterised in that** the handle (5) with which the auxiliary shaft (4) is provided in the lower part is formed by the control handle for the actuator (6).

8. A double-shaft portable electric tool according to any one of claims 1 to 3 **characterised in that** the control handle (3 or 5) is mounted with a capability of rotation over about 180° so as to permit adjustment of its orientation and thus use thereof by a left-handed or right-handed operator.

9. A double-shaft portable electric tool according to any one of claims 1 to 3 or 8 **characterised in that** the active head (1) is mounted with a capability of rotation over about 180° so as to permit adjustment of its orientation and thus use thereof by a left-handed or right-handed operator.

10. A double-shaft portable electric tool according to any one of claims 1 to 8 **characterised in that** its active head (1) is formed by pruning shears or a chain saw.

11. A double-shaft portable electric tool according to any one of claims 1 to 8 **characterised in that** its active head (1) is formed by a head for harvesting small fruits.

## Patentansprüche

1. Tragbares Elektrowerkzeug, enthaltend einen aktiven motorisierten Antriebskopf (1), der von einem Schalter (6) betätigt wird und am oberen Ende einer Griffstange (2) zum Tragen des Kopfs installiert ist, deren unteres Ende mit einem Griff (3) ausgestattet ist, **dadurch gekennzeichnet, dass** eine zweite Griffstange oder Hilfsgriffstange (4) so befestigt oder angeordnet ist, dass sie an der Griffstange (2) zum Tragen des Kopfs unterhalb oder von dem aktiven Kopf (1) beabstandet befestigt werden kann, wobei sie wenigstens in ihrem proximalen Abschnitt einen spitzen Winkel (α) mit der Griffstange (2) zum Tragen des Kopfs bildet, wobei diese Hilfsgriffstange (4) so dimensioniert ist, dass ihr freies, mit einem Griff (5) ausgestattetes Ende sich auf der Höhe oder im Wesentlichen auf der Höhe des Griffs (3) befindet, mit dem der untere Teil der Griffstange (2) zum Tragen des Kopfs ausgestattet ist, wobei einer der Griffe (3, 5) den Bediengriff des Schalters bildet.

2. Tragbares Elektrowerkzeug mit zwei Griffstangen nach Anspruch 1, **dadurch gekennzeichnet, dass** der untere Teil (4a) der mit einem Griff (5) ausgestatteten zweiten Griffstange oder Hilfsgriffstange (4) in Richtung des unteren Teils der mit einem Griff (3) versehenen Griffstange (2) zum Tragen des Kopfs so gebogen oder abgewinkelt ist, dass die Griffe (3 und 5) parallel oder im Wesentlichen parallel ausgerichtet sind.

3. Tragbares Elektrowerkzeug mit zwei Griffstangen nach einem der Ansprüche 1 oder 2, **dadurch gekennzeichnet, dass** die Griffstange (2) zum Tragen des Kopfs aus einer Stange mit verstellbarer Länge besteht, die aus zwei oder mehr Abschnitten (2a, 2b) gebildet wird, die teleskopisch miteinander verbunden und mit bekannten Arretiermitteln ausgestattet sind, die ein starres Zusammenfügen dieser zwei oder mehr Abschnitte nach dem Einstellen der gewünschten Länge ermöglichen; wobei die Hilfsgriffstange (4) dabei am unteren Abschnitt (2a) der Stange befestigt ist.

4. Tragbares Elektrowerkzeug mit zwei Griffstangen nach einem der Ansprüche 1 bis 3, **dadurch gekennzeichnet, dass** der Schalter, der den Antrieb des beweglichen Organs oder der beweglichen Organe des aktiven Kopfs (1) sicherstellt, am oberen Teil der Griffstange (2) zum Tragen des Kopfs installiert ist.

5. Tragbares Elektrowerkzeug mit zwei Griffstangen nach einem der Ansprüche 1 bis 3, **dadurch gekennzeichnet, dass** der Schalter, der den Antrieb des beweglichen Organs oder der beweglichen Organe des aktiven Kopfs (1) sicherstellt, am unteren Teil der Griffstange (2) zum Tragen des Kopfs installiert ist.

6. Tragbares Elektrowerkzeug mit zwei Griffstangen nach einem der Ansprüche 1 bis 5, **dadurch gekennzeichnet, dass** der Griff (3), mit dem die Griffstange (2) zum Tragen des Kopfs im unteren Teil ausgestattet ist, durch den Bediengriff des Schalters (6) gebildet ist.

7. Tragbares Elektrowerkzeug mit zwei Griffstangen nach einem der Ansprüche 1 bis 5, **dadurch gekennzeichnet, dass** der Griff (5), mit dem die Hilfsgriffstange (4) im unteren Teil ausgestattet, durch den Bediengriff des Schalters (6) gebildet ist.

8. Tragbares Elektrowerkzeug mit zwei Griffstangen nach einem der Ansprüche 1 bis 3, **dadurch gekennzeichnet, dass** der Bediengriff (3 oder 5) um etwa 180° drehbar montiert ist, um so eine Verstellung seiner Ausrichtung und auf diese Weise seine Nutzung durch eine Rechtshänder- oder Linkshänder-Bedienperson zu ermöglichen.

9. Tragbares Elektrowerkzeug mit zwei Griffstangen nach einem der Ansprüche 1 bis 3 oder 8, **dadurch gekennzeichnet, dass** der aktive Kopf (1) um etwa 180° drehbar montiert ist, um so eine Verstellung seiner Ausrichtung und auf diese Weise seine Nutzung durch eine Rechtshänder- oder Linkshänder-Bedienperson zu ermöglichen.

10. Tragbares Elektrowerkzeug mit zwei Griffstangen nach einem der Ansprüche 1 bis 8, **dadurch gekennzeichnet, dass** der aktive Kopf (1) aus einer Gartenschere oder aus einer Kettensäge besteht.

11. Tragbares Elektrowerkzeug mit zwei Griffstangen nach einem der Ansprüche 1 bis 8, **dadurch gekennzeichnet, dass** der aktive Kopf (1) aus einem Erntekopf für kleine Früchte besteht.
